# EUROPEAN PATENT APPLICATION

(11) **EP 1 744 068 A1**
(43) Date of publication of application: **17.01.2007**
(21) Application number: 06076282.0
(22) Date of filing: 22.06.2006
(51) Int. Cl.: F16B 41/00

(54) **Fastener retention mechanism**

(30) Priority: 12.07.2005 US 698601 P
(71) Applicant: Delphi Technologies, Inc., Troy, Michigan 48007 (US)
(72) Inventor: Hain, Timothy A., Freeland MI 48623 (US); Sweigart, Mark A., Saginaw MI, 48603 (US); Hansen, Dennis, Saginaw MI 48623 (US)
(74) Representative: Denton, Michael John

(57) **Abstract**

A system for retaining a fastener within an opening of a first component (13). The system comprises a fastener (20) including a fastening portion (24) for engaging a portion of a second component to secure the fastener (20) to the second component, and a bearing portion (22) for bearing against the first component (13) when the fastening portion (24) is engaged with the second component, to secure the first component (13) to the second component. At least one tab (14) extends from the first component (13) for retaining the fastener (20) within the opening (12) of the first component so as to permit unobstructed movement of the fastener (20) within the opening (12), between the bearing portion (22) and the fastening portion (24), along an axis (100) of the fastener (20).

## Description

### BACKGROUND OF THE INVENTION

The present invention relates generally to methods for retaining a fastener to a component and, more specifically, to a system for retaining a fastener to the component during shipping of the component and during attachment of the component to another component using the fastener.

Many components of assemblies or sub-assemblies are attached to another component or assembly using bolts or other fasteners. It is often desirable for the fasteners to be positioned and secured within a through hole of the component for shipping or handling of the component prior to its attachment. This enables a supplier of the component to ship the component with the fasteners already positioned and ready for attachment, thereby obviating the need to apply the fasteners at the point of assembly and increasing the efficiency of the assembly process.

Another issue arises where multiple fasteners are used to secure first and second components together. In this case, it may be difficult to align all of the fasteners attached to the first component with associated holes or mating features in the second component, prior to actuating the fasteners to secure the first and second components together. Thus, it is frequently desirable to attach the fasteners to the first component for shipping so as to permit some movement or "slack" of the fastener within the holes in the first component, to enable multiple fasteners to be more easily aligned with their respective mating features on the second component.

### SUMMARY OF THE INVENTION

In accordance with the present invention, a system is provided for retaining a fastener within an opening of a first component. The system comprises a fastener including a fastening portion for engaging a portion of a second component to secure the fastener to the second component, and a bearing portion for bearing against the first component when the fastening portion is engaged with the second component, to secure the first component to the second component. At least one tab extends from the first component for retaining the fastener within the opening of the first component so as to permit unobstructed movement of the fastener within the opening, between the bearing portion and the fastening portion, along an axis of the fastener.

### BRIEF DESCRIPTION OF THE DRAWINGS

In the drawings illustrating embodiments of the present invention:
FIG. 1 is a plan view of one embodiment of a fastener orifice configuration of a fastener retainer system in accordance with the present invention;
FIG. 2 is a side view of a fastener configuration in accordance with the present invention;
FIG. 3 is a side cross-sectional view of the orifice of FIG. 1 and the fastener of FIG. 2 assembled into a mechanism in accordance with the present invention;
FIGS. 4 and 5 are views showing one exemplary application of a mechanism in accordance with the present invention;
FIG. 6 is a cross-sectional side view of an alternative embodiment of a fastener retainer system in accordance with the present invention, shown during insertion of a fastener into a first component of the system; and
FIG. 7 is the cross-sectional side view of FIG. 6 showing a configuration of the alternative embodiment of the system when the fastener is fully inserted into the first component.

### DESCRIPTION OF THE PREFERED EMBODIMENTS

In accordance with the present invention, a system is provided for retaining a bolt or other fastener in an associated orifice of a first component or sub-assembly during transport of the component or sub-assembly. The mechanism described herein also allows the position of the fastener within the orifice to be adjusted without removing the fastener from the orifice, thereby facilitating alignment of the fastener with a mating feature on a second component of assembly for attachment to the second component.

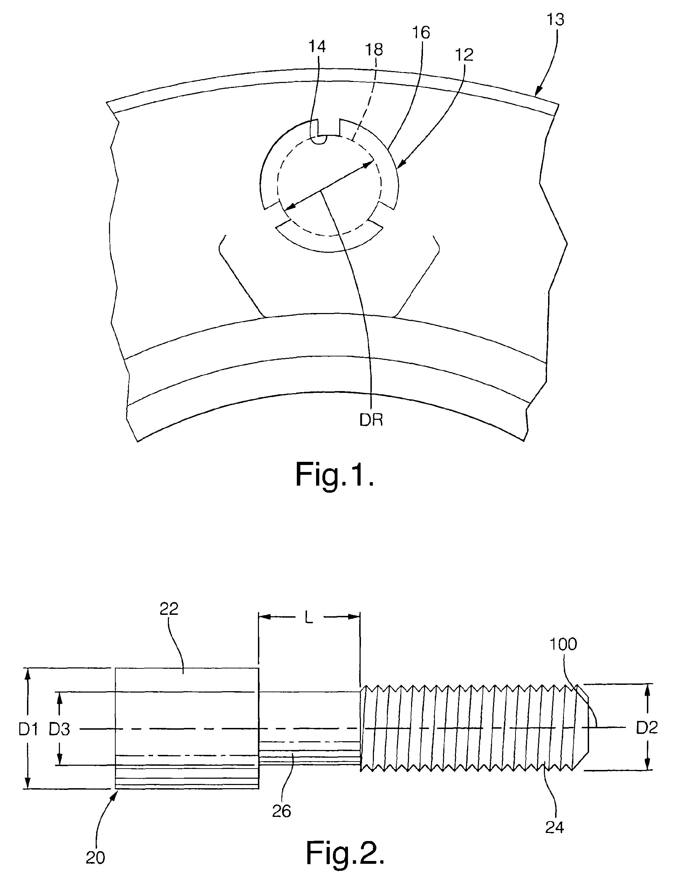

Referring to FIG. 1, an orifice or opening 12 is formed in a plate, flange, or other portion of a first component or sub-assembly 13 which is to be mounted to a second component (not shown). At least one resiliently bendable tab 14 extends from first component 13. Tab or tabs 14 may be formed integral with an edge of the opening or otherwise integrally with the structure of first component 13. In the embodiment shown in FIG. 1, three substantially equally angularly-spaced-apart tabs project from edges of a substantially circular orifice 12 into the orifice. Tabs 14 project radially inwardly toward the center of the orifice and collectively define an opening 18 having an effective size or diameter DR that is smaller than the size of the orifice without the tabs, thereby effectively constricting the orifice. However, orifice shapes, tab shapes, and tab arrangements other than those shown in FIG. 1 are also contemplated. For example, a single tab may extend from first component 13 into the orifice to retain the fastener within orifice 12, as long as an opening formed between tab 14 and an edge of orifice 12 opposite the tab is sized to prevent passage of a fastener fastening portion 24 (described below) therethrough without deflecting tab 14.

In a particular embodiment (not shown), tab 14 is formed with a tapered cross-section to have a thickness dimension varying from a relatively thicker dimension proximate a base of the tab, to a relatively thinner dimension proximate a free end of the tab. The taper may be formed by, for example, coining during stamping or fabrication of first component 13. Tapering of tab 14 enhances the force-deflection properties of the tab, making breakage less likely in cases where, for example, the component is formed from a material having a relatively low ductility.

FIG. 2 shows a fastener 20 suitable for use in the mechanism of the present invention. Fastener includes an axis 100 extending therethrough, a fastening portion 24 extending along axis 100 for engaging a portion of a second component (not shown) to secure the fastener to the second component, and a bearing portion 22 extending along axis 100 for bearing against first component 13 when the fastening portion is engaged with the second component, to secure first component 13 to the second component. In the embodiment shown in FIGS. 1-3, bearing portion 22 has an outer diameter D1, and fastening portion 24 has an outer diameter D2. In one embodiment, fastening portion 24 of fastener 20 is threaded. As used herein, an axis of the fastener is understood to be any axis extending through the fastener (for example, a longitudinal axis such as axis 100 shown in FIG. 1.)

A portion 26 of fastener 20 extending between bearing portion 22 and fastening portion 24 is dimensioned in relation to restricted opening 18 (FIG. 1) so as to permit unobstructed movement of the fastener within the opening, between bearing portion 22 and fastening portion 24, along axis 100 of the fastener. Thus, in the embodiment shown in FIGS. 1-3, fastener portion 26 has a maximum outer surface diameter D3 that is less than the diameter DR of restricted orifice 18, so as to provide a clearance fit between the boundaries of the restricted opening and portion 26 of the fastener. This permits the fastener to move without obstruction axially and/or laterally within orifice 12 when the fastener is properly inserted into the orifice, allowing the axial position and angular orientation of the fastener within orifice 12 to be adjusted without removing the fastener from the orifice and facilitating alignment of the fastener with a mating feature on the second component (not shown).

In the particular embodiment shown in FIGS. 1-3, fastening portion 24 and restricted opening 18 are dimensioned such that tabs 14 are engageable with fastening portion 24 when the fastener is properly positioned in opening 12, to obstruct axial movement of the fastener within the opening along fastening portion 24, thereby impeding removal of the fastener from the opening. As used herein, an axial movement of the fastener is understood to comprise a movement of the fastener along an axis of the fastener.

The size of restricted opening 18 may be set by suitably defining the shapes, dimensions, and spatial arrangement of the tabs. In general, restricted opening 18 and diameter D2 of fastener portion 24 are sized such that the restricted opening 18 is smaller than D2. This ensures an interference between diameter D2 of fastener portion 24 and restricted opening 18, thus preventing movement of the fastener in the directions indicated by arrow A along fastening portion 24 within opening 12, and preventing undesired withdrawal of the fastener from orifice 12 after insertion. As used herein, the term interference is understood to mean "something that hinders, obstructs, or impedes."

Also in this embodiment, fastening portion 24 is engagseable with tabs 14 during insertion of the fastening portion into the opening to resiliently bend tabs 14. Furthermore, restricted opening 18 and diameter D2 of fastening portion 24 are preferably sized such that fastening portion 24 may be inserted past tabs 14 without the tabs being permanently bent or deformed (i.e., the tabs are resiliently bent by engagement with the second portion of the fastener.) This enables a restricted opening 18 of the desired size to be re-established after fastening portion 24 has been inserted into orifice 12 past the tabs. As known in the art, the elasticity of tabs 14 will be a function of such factors as the material from which the tabs and their supporting structure is formed and the tab geometry. In general, tabs 14 will be formed integrally with the material defining orifice 12.

Finally, diameter DR of restricted opening 18 and diameter D2 of fastening portion 24 are preferably sized such that fastening portion 24 may not be withdrawn from the orifice without the application of a significant amount of force. In the embodiment shown in FIGS. 1-3, for example, fastener 20 may not be withdrawn from orifice 12 without applying a force sufficient to deflect tabs 14 in a direction opposite to the direction the tabs deflected during insertion of the fastener into the opening. This helps to ensure that the fastener will not simply fall out of the orifice or be removed from the orifice by a slight impact on an end of the second portion of the fastener.

The length L (FIG. 1) of fastener portion 26 may be specified such that the fastener is movable axially to substantially any degree desired for facilitating positioning and securement of the fastener to the main assembly. In addition, by suitable specifying the length of portion 26 of the fastener, the limits of movement of the ends of the fastener may be defined to provide a desired degree of clearance between fastening portion 24 and a respective mating portion of the second component.

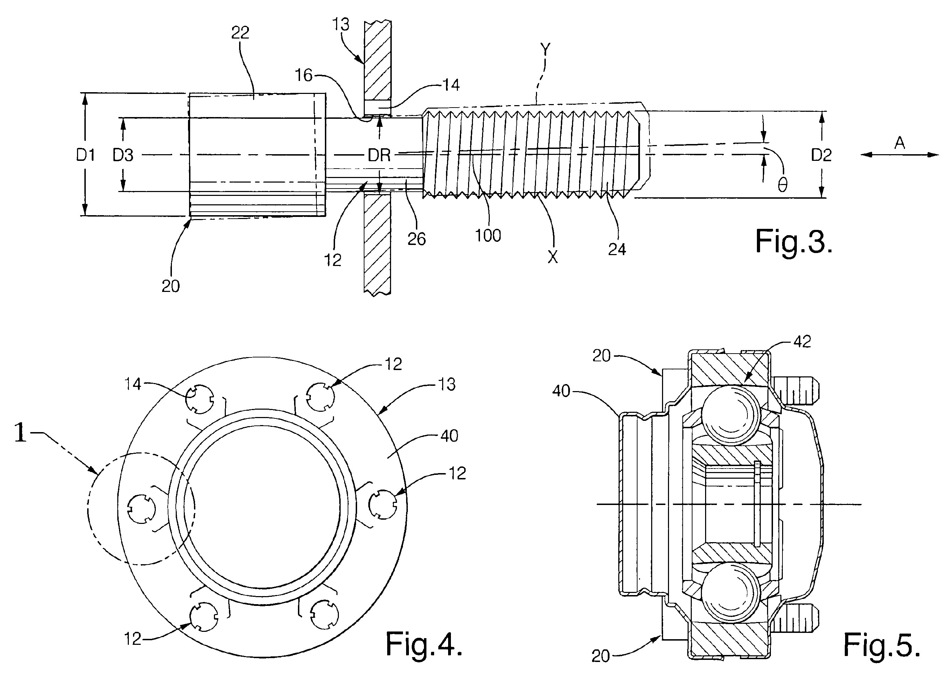

FIG. 3 shows an assembled view of one embodiment of the mechanism of the present invention. Fastener 20 may be positioned within orifice 12 by forcing the fastener through restricted opening 18 (FIG. 1), causing tabs 14 to resiliently bend or deflect until fastening portion 24 of the fastener has been inserted past the tabs. Tabs 14 then return to substantially undeflected states, thereby re-forming restricted opening 18.

FIG. 3 shows fastener 20 extending into opening 12 substantially perpendicular to a plane of the opening (orientation "X"), and in substantial alignement with axis 100 of the fastener. FIG. 3 also shows a view of fastener 20 extending into opening 12 at an angle with respect to a plane of the opening (orientation "Y") and extending at an angle θ with respect to axis 100. As used herein, angular motion of fastener 20 or a portion of the fastener is understood to mean motion of a portion of the fastener away from an axis of the fastener. By suitably specifying the clearance or difference between diameter D3 and the diameter DR of restricted opening 18, in relation to the thickness of the material comprising first component 13, the angular variability of fastening portion 24 may be controlled to enable anglular motion of the fastening portion of the fastener, thereby providing flexibility in positioning and engaging the fastening portion with a correspoinding mating feature located on the second component (not shown).

Referring to FIGS. 4 and 5, in a particular application of the mechanism of the present invention, orifices 12 as described above are formed in a metal stamping 40 which forms a cover of a constant velocity joint assembly 42. Joint assembly 42 is secured to a frame (not shown) of an automotive vehicle in a known manner using fasteners 20 in the form of bolts inserted into orifices 12. Bolts 20 include the pertinent features described above for engaging tabs 14 formed in the orifices, as previously described. While the embodiment shown in FIGS. 4 and 5 relates to a system of bolts used to secure a constant velocity joint to a vehicle, the fastener retention mechanism described herein may also be used with other types of fasteners and incorporated into individual parts or other types of sub-assemblies.

From the description and drawings set forth herein, it may be seen that the combination of axial and radial clearance between orifice 12 and the portion of fastener 20 extending into orifice 12 permits an angular displacement of a portion of the fastener with respect to fastener axis 100. This permits easier alignment of multiple fasteners with respective mounting features or holes, to compensate for misalignment between the fasteners in first component 13 and the mating features in a second component or assembly (not shown) to which component 13 is to be attached.

In addition, the axial travel of the fastener permitted by the retaining system design shown herein allows each fastener to be mated individually, thus obviating the need to line up all the fasteners in component 13 with correspopnding mating features in the second component or assembly prior to applying the fasteners.

Also, the length of the portion of the fastener extending between bearing portion 22 and fastening portion 24 can be specified to permit as much axial travel of the fastener as desired, accoriding to a particular application. This, in conmjunction with the angular mobility of the fastener, permits even greater flexibility in aligning the fasteners with ther respective mating features on the second component.

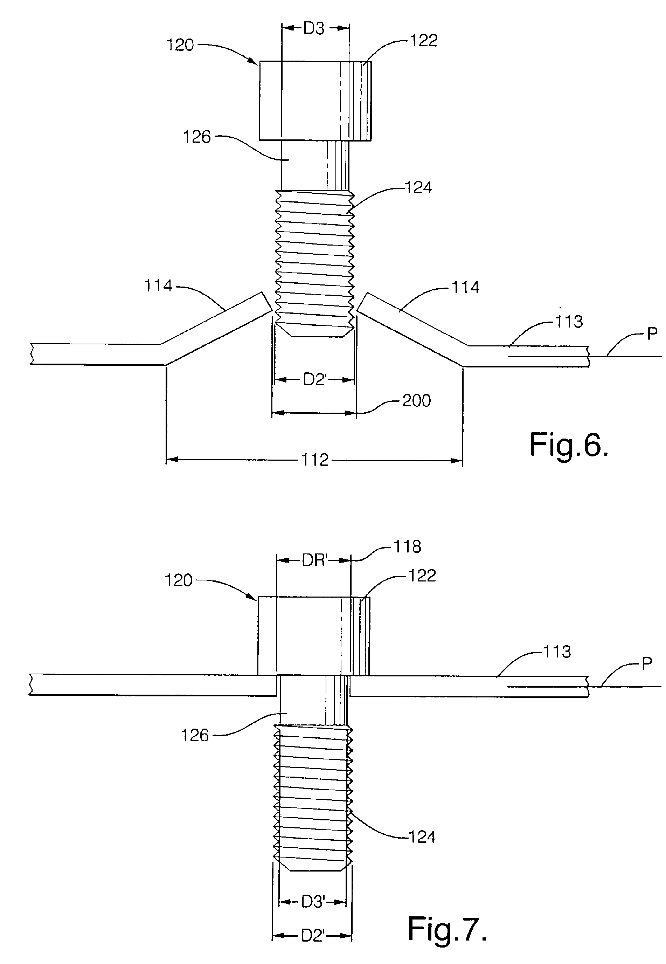

Referring now to FIGS. 6 and 7, in another alternative embodiment, a first component 113 defines a plane P along which an opening 112 extends, similar to opening 12 as described in the previous embodiment. One or more tabs 114 extend out of the plane of opening 112 prior to insertion of the fastener 120 into the opening, to define an opening 200 sized to permit unobstructed insertion of fastening portion 124 therethrough. In this embodiment, after fasteneing portion 124 has been inserted into opening 200, a fastener bearing portion 122 engages tabs 114 to bend the tabs back toward plane P, into an orientation such that the tabs form a restricted opening 118 having a diameter DR' smaller than diameter D2' of fastener portion 124, the tabs 114 thus becoming engageable with fastening portion 124 upon attempted withdrawal of the fastener from the opening, to obstruct axial movement of fastening portion 124 into opening 118. The tabs 114 may alternatively be bent toward opening 112 by using a tool, rather than the bearing portion of the fastener.

It will be understood that the foregoing description of an embodiment of the present invention is for illustrative purposes only. As such, the various structural and operational features herein disclosed are susceptible to a number of modifications commensurate with the abilities of one of ordinary skill in the art, none of which departs from the scope of the present invention as defined in the appended claims.

## Claims

1. A system for retaining a fastener within an opening of a first component (13), the system comprising:
a fastener (20) including a fastening portion (24) for engaging a portion of a second component to secure the fastener (20) to the second component, and a bearing portion (22) for bearing against the first component (13) when the fastening portion (24) is engaged with the second component, to secure the first component (13) to the second component; and
at least one tab (14) extending from the first component (13) for retaining the fastener (20) within the opening (12) of the first component (13) so as to permit unobstructed movement of the fastener (20) within the opening (12), between the bearing portion (22) and the fastening portion (24), along an axis (100) of the fastener (20).

2. The system of claim 1 wherein the at least one tab (14) is resiliently bendable.

3. The system of claim 1 wherein a plurality of tabs (14) extend from the first component (13) for retaining the fastener (20) within the opening of the first component (13).

4. The system of claim 1 wherein the at least one tab (14) extends into the opening (12).

5. The system of claim 1 wherein the at least one tab (14) extends from an edge portion of the opening (12).

6. The system of claim 5 wherein the at least one tab (14) is formed integral with an edge of the opening (12).

7. The system of claim 1 wherein the at least one tab (14) is engageable with the fastening portion (24) to obstruct axial movement of the fastener (20) within the opening (12), along the fastening portion (24) thereby impeding removal of the fastener (20) from the opening (12).

8. The system of claim 1 wherein the at least one tab (14) has a varying thickness dimension.

9. The system of claim 1 wherein the fastening portion (24) of the fastener (20) is engagseable with the at least one tab (14) during insertion of the fastening portion (24) into the opening (12) to resiliently bend the at least one tab (14).

10. The system of claim 1 wherein the fastening portion (24) of the fastener (20) is threaded.

11. The system of claim 1 wherein at least one tab (14) retains the fastener (20) within the opening (12) of the first component (13) so as to permit angular motion of a portion of the fastener (20).

12. The system of claim 1 wherein the bearing portion (22) of the fastener (20) has a first diameter (D1), the fastening portion (24) has a second diameter (D2), a portion of the fastener (20) extending between the bearing portion (22) and the fastening portion (24) has a third diameter (D3), and wherein the second diameter (D2) is greater than the third diameter (D3) and the first diameter (D1) is greater than the second diameter (D2).

13. The system of claim 1 wherein the at least one tab (14) is resiliently bendable, the first component (13) defines a plane (P) along which the opening (12) extends, and wherein the at least one tab (14) extends out of the plane (P) of the opening (12) prior to insertion of the fastener (20) into the opening (12), to define an opening (200) sized to permit unobstructed insertion of the fastening portion (24) of the fastener (20) therethrough.

14. The system of claim 13 wherein, during insertion of the fastener (20) into the opening (12), the bearing portion (22) of the fastener (20) engages the at least one tab (14) to bend the at least one tab (14) into an orientation such that the at least one tab (14) is engageable with the fastening portion (24) to obstruct axial movement of the fastener (20) within the opening (12) along the fastening portion (24).

15. A system for retaining a fastener within an opening of a component (13), the system comprising:
a fastener (20) including a fastening portion (24) and a bearing portion (22) for bearing against the component (13);
at least one tab (14) extending from the component (13), the at least one tab (14) being engagable with the bearing portion (22) and the fastening portion (24) for retaining the fastener (20) within the opening (12),
a portion of the fastener (20) residing between the bearing portion (22) and the fastening portion (24) being dimensioned so as to permit unobstructed axial movement of the fastener (20) within the opening (12) between the bearing portion (22) and the fastening portion (24), and
wherein the bearing portion (22) is dimensioned so as to prevernt insertion of the bearing portion (22) into the opening (12).
